# DEMANDE DE BREVET EUROPEEN

(11) **EP 1 043 052 A1**
(43) Date de publication de la demande: **11.10.2000**
(21) Numéro de dépôt: 00400965.0
(22) Date de dépôt: 07.04.2000
(51) Int. Cl.: B01D 29/05, B01D 29/52, B01D 29/96, B01D 35/30

(54) **Caisson récepteur d'un élément de fonction et batterie de tels caissons**

(30) Priorité: 09.04.1999 FR 9904473
(71) Demandeur: Cocault, Alain, 85610 Cugand (FR)
(72) Inventeur: Cocault, Alain, 85610 Cugand (FR)
(74) Mandataire: Dawidowicz, Armand

(57) **Abrégé**

L'invention concerne un caisson (1) récepteur d'un élément de traitement de fluide, ledit caisson (1) étant constitué d'un cadre à face frontale (1A) ouverte pour permettre l'introduction à emboîtement de l'élément de traitement jusqu'à une position d'appui à l'intérieur dudit cadre.

Ce caisson (1) est caractérisé en ce qu'il comporte des paliers (3) de support d'une broche (4) rotative, ladite broche montée amovible à l'intérieur desdits paliers (3) présentant un élément de serrage (5), tel qu'une came, agissant par poussée contre la surface frontale de l'élément de traitement lors de l'entraînement en rotation de la broche (4) de manière à obtenir par réaction sur les paliers (3) de support de broche une immobilisation de l'élément de fonction (2) à l'intérieur dudit caisson.

Application : caisson de filtration - d'aération

## Description

La présente invention concerne un caisson récepteur d'un élément de fonction, en particulier d'un élément de traitement de fluide, ainsi qu'une batterie de tels caissons récepteurs.

De nombreux dispositifs, tels que les dispositifs de filtration, les dispositifs d'aération, sont toujours conçus de la même manière. Ils sont constitués d'un caisson récepteur affectant généralement la forme d'un cadre présentant une face frontale ouverte à travers laquelle peut être introduit l'élément de fonction, en particulier un élément de traitement de fluide, tel qu'un élément de filtration, un élément d'évacuation de fluide ou autre, cet élément étant introduit à emboîtement à travers la face frontale ouverte jusqu'à une position d'appui à l'intérieur dudit caisson récepteur.

Le problème de tels ensembles est de maintenir en position l'élément de fonction à l'intérieur du caisson récepteur au moyen d'organes de maintien faciles à mettre en oeuvre et rapides à installer. Jusqu'à présent, les éléments de fonction, en particulier les filtres, sont fixés au caisson récepteur à l'aide d'agrafes positionnées sur la partie interne de la face formant fond du caisson récepteur. Ces agrafes sont d'accès difficile et ne tolèrent pas de variations dimensionnelles de l'élément de fonction en raison de leur conception. Par ailleurs, du fait de leur nombre (elles sont en général au nombre de quatre), ces agrafes nécessitent un temps de mise en place relativement important. Enfin, leur maintenance est difficile.

D'autres solutions ont également été envisagées. Ainsi, le document US-A-5.458.772 concerne un caisson dont l'élément de fonction est maintenu à l'intérieur du caisson au moyen d'une anse pourvue d'un joint d'étanchéité. Cette anse est monté par l'intermédiaire de doigts formant axe de rotation à l'intérieur de paliers ménagés sur la face frontale du caisson. L'immobilisation de l'anse contre l'élément de fonction contenu à l'intérieur du caisson s'effectue par l'intermédiaire d'organes de verrouillage indépendants de l'anse et grâce à l'axe de rotation de l'anse qui vient en butée à l'intérieur de son palier, ce palier affectant la forme d'une fente. Comme le mentionne la description de ce brevet, en particulier page 5 - lignes 25 à 30, en fonction de l'épaisseur de l'élément de fonction, soit cet élément de fonction est d'épaisseur insuffisante, auquel cas seul le poids de l'anse permet un maintien de l'élément de fonction à l'intérieur du caisson, soit l'élément de fonction atteint une certaine épaisseur et, dans ce cas, l'organe de verrouillage, en coopération avec l'anse montée à rotation, permet un verrouillage efficace de l'élément de fonction. En conséquence, une immobilisation de l'élément de fonction à l'intérieur du caisson n'est pas obtenue par réaction sur des paliers de l'anse mais au moyen d'un organe de verrouillage supplémentaire.

Le document US-A-4.762.053 décrit quant à lui un caisson dont l'élément de fonction est maintenu à l'intérieur du caisson au moyen d'une structure réalisée en fils métalliques, cette structure affectant la forme d'une boucle compressible déformable de manière à permettre l'insertion d'au moins une partie de cette structure sous un rebord jouxtant la face frontale du caisson. Ce blocage permet le maintien en position de l'élément de fonction à l'intérieur du caisson. Toutefois, si l'épaisseur de l'élément de fonction ne correspond pas strictement à la profondeur du caisson, on constate un jeu de l'élément de fonction à l'intérieur du caisson.

Enfin, le document US-A-5.601.715 décrit un élément de fonction maintenu à l'intérieur d'un caisson au moyen d'une pince à ressort.

Aucune des solutions décrites dans ces documents américains ne permet d'obtenir une immobilisation sans jeu de l'élément de fonction à l'intérieur du caisson, indépendamment de l'épaisseur de l'élément de fonction. Par ailleurs, la plupart de ces solutions nécessitent la mise en oeuvre d'organes élastiquement déformables ou d'organes de verrouillage supplémentaires.

Un but de la présente invention est de proposer un caisson récepteur dont la conception permet une immobilisation rapide et quasi instantanée de l'élément de fonction à l'intérieur dudit caisson, cet élément de fonction pouvant présenter des variations dimensionnelles d'un élément à un autre.

Un autre but de la présente invention est de proposer, dans le cadre d'une batterie de caissons récepteurs, une conception des organes de maintien des éléments de fonction à l'intérieur des caissons telle que le verrouillage de chaque élément de fonction dans un caisson récepteur s'effectue simultanément au moyen d'une seule manipulation.

A cet effet, l'invention a pour objet un caisson récepteur d'un élément de fonction, en particulier d'un élément de traitement de fluide, tel qu'un filtre, une grille d'aération ou similaire, ledit caisson récepteur étant constitué d'un cadre à face frontale ouverte pour permettre l'introduction à emboîtement de l'élément de fonction jusqu'à une position d'appui à l'intérieur dudit cadre, caractérisé en ce que, pour le maintien de l'élément de fonction à l'intérieur du caisson, le caisson comporte des paliers de support d'une broche rotative, ladite broche montée amovible à l'intérieur desdits paliers présentant un élément de serrage, tel qu'une came ou un plot, excentré agissant par poussée contre la surface frontale de l'élément de fonction lors de l'entraînement en rotation de la broche de manière à obtenir par réaction sur les paliers de support de broche une immobilisation de l'élément de fonction à l'intérieur dudit caisson.

Grâce à la conception de la broche entraînée en rotation sur elle-même autour de son axe longitudinal et à la présence d'un élément de serrage excentré solidaire en rotation de la broche, un maintien sans jeu de l'élément de fonction à l'intérieur du caisson peut être obtenu pour une épaisseur quelconque de l'élément de fonction.

L'invention a encore pour objet une batterie de caissons récepteurs du type formée d'une pluralité de caissons récepteurs disposés côte à côte, chaque caisson récepteur étant constitué d'un cadre à face frontale ouverte pour permettre l'introduction à emboîtement d'un élément de fonction, notamment d'un élément de traitement de fluide jusqu'à une position d'appui à l'intérieur dudit cadre, caractérisée en ce que chaque caisson récepteur de la batterie de caissons comporte au moins un palier support d'une broche rotative, ladite broche, montée amovible à l'intérieur des paliers de la batterie de caissons, présentant des éléments de serrage, tels qu'une came ou un plot excentré, agissant par poussée contre la surface frontale de l'élément de traitement correspondant lors de la rotation de la broche de manière à obtenir, par réaction sur les paliers de support de broche, une immobilisation simultanée de chaque élément de traitement à l'intérieur de chaque caisson.

L'invention sera bien comprise à la lecture de la description suivante d'un exemple de réalisation, en référence aux dessins annexés dans lesquels :
la figure 1 représente une vue schématique en perspective, en position éclatée, des éléments constitutifs du caisson récepteur et de son élément de traitement, avec la vue de côté correspondante ;
la figure 2 représente une vue schématique en perspective d'un caisson récepteur à l'état assemblé non verrouillé de l'élément de fonction, avec la vue de côté correspondante ;
la figure 3 représente une vue schématique en perspective d'un caisson à l'état assemblé verrouillé de l'élément de traitement, avec la vue de côté correspondante et
la figure 4 représente une vue schématique en perspective d'une batterie de caissons, avec une vue de détail de la constitution de la broche.

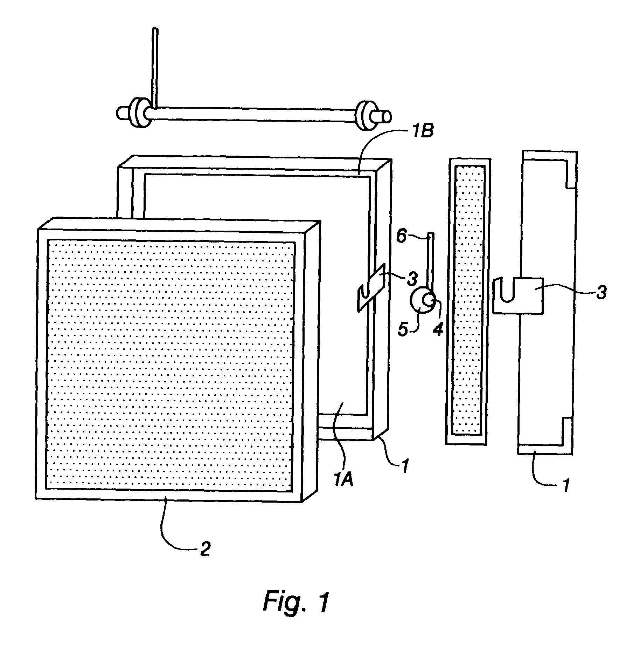

Le caisson 1, objet de l'invention, est destiné à recevoir un élément de fonction 2 constitué, de manière générale, d'un élément de traitement de fluide, tel qu'un élément de filtration, un élément d'évacuation de fluide ou autre. Le caisson 1 affecte la forme d'un cadre généralement rectangulaire ou carré dont la face frontale 1A est ouverte pour permettre l'introduction à emboîtement de l'élément de fonction 2 dont le pourtour est de forme sensiblement complémentaire audit cadre. Cet élément de fonction 2 est introduit à l'intérieur dudit cadre jusqu'à une position d'appui à l'intérieur du cadre. Cette position d'appui peut par exemple être délimitée par la face formant fond ou face arrière 1B du caisson 1 comme le montre la figure 1 où chaque montant ou traverse du cadre affecte la forme d'une cornière de manière à délimiter une face arrière au moins partiellement ouverte délimitant une surface d'appui pour l'élément de fonction 2.

Ce caisson 1 comporte encore des paliers 3 de support d'une broche 4 rotative. Ces paliers 3 de support de broche affectent, dans l'exemple représenté, la forme de crochets disposés sur les parties externes des faces latérales du cadre du caisson. Ces crochets sont généralement fixés par rivetage ou vissage. La broche 4, montée quant à elle amovible à l'intérieur des paliers 3, est constituée d'un axe généralement métallique et constitue un élément rigide. Cette broche présente un élément de serrage 5, tel qu'une came ou un plot, excentré. Cet élément de serrage 5, solidaire en rotation de la broche, agit par poussée contre la surface frontale de l'élément de fonction 2, une fois ce dernier introduit à l'intérieur du caisson 1 récepteur, et ce lors de l'entraînement en rotation de la broche 4 sur elle-même autour de son axe longitudinal, de manière à obtenir par réaction sur les paliers 3 de support de broche une immobilisation de l'élément de fonction 2 à l'intérieur dudit caisson 1. En effet, cet élément de fonction 2 se retrouve immobilisé entre la surface d'appui du caisson ménagée par la face arrière 1B de ce dernier et la surface d'appui de l'élément de serrage 5 équipant la broche 4. Cette broche 4 peut encore être équipée d'une poignée 6, montée de préférence amovible sur la broche 4, pour faciliter l'entraînement en rotation de la broche.

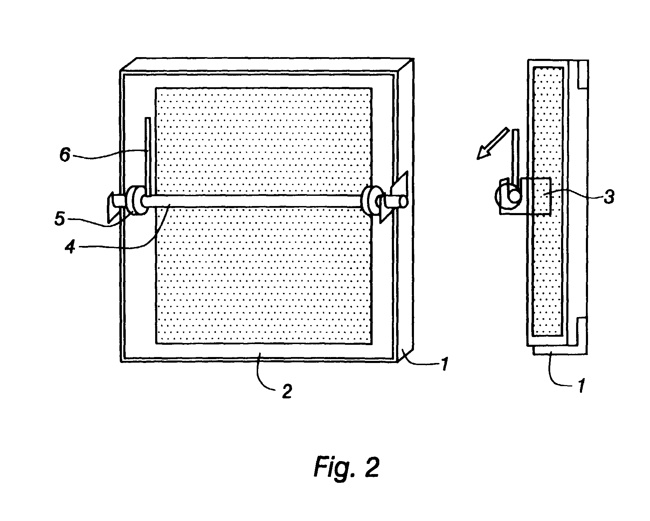

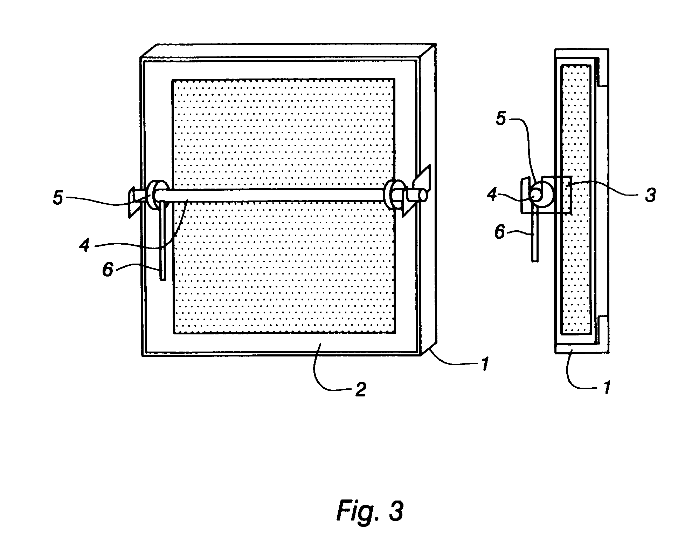

Comme le montrent les figures 2 et 3, du fait de la conception excentrée de l'élément de serrage 5, un maintien de l'élément de fonction 2 dans le caisson 1 peut être obtenu, dans tous les cas, indépendamment de l'épaisseur de l'élément de fonction 2. Généralement, du fait de la conception de l'élément de fonction, dont la partie centrale est fragile et ne supporte pas de pression, chaque broche 4 est équipée de deux éléments de serrage exerçant à chaque fois une pression contre une partie du bord de l'élément de fonction 2.

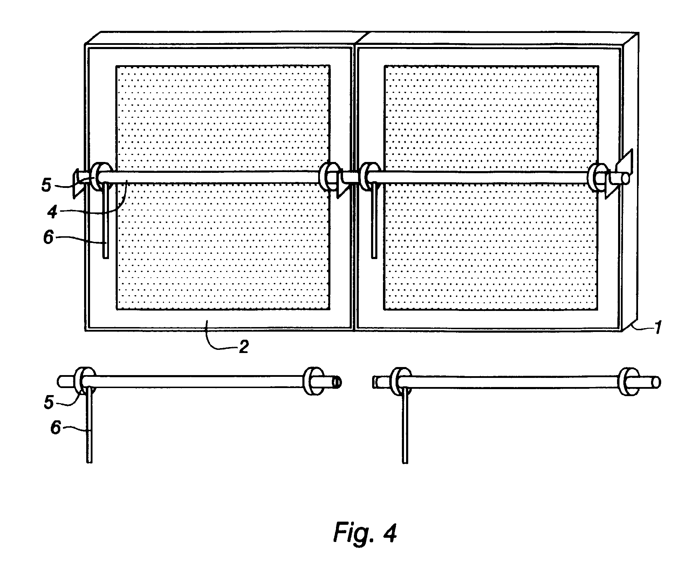

Par ailleurs, chaque caisson récepteur peut s'intégrer à une batterie de caissons. Dans ce cas, chaque caisson est disposé côte à côte et reçoit un élément de fonction 2. La broche peut alors être sectionnée, comme le montre la figure 4, les extrémités de chaque section de broche 4 étant agencées pour pouvoir se raccorder aux extrémités d'une section de broche adjacente. La liaison entre sections de broche réalisée par emboîtage, rivetage ou autre assure, lors d'un entraînement en rotation d'une section de broche, l'entraînement simultané en rotation d'une section de broche adjacente. De ce fait, l'opération d'immobilisation et de maintien d'un élément de fonction 2 à l'intérieur d'un caisson devient extrêmement rapide et peut être réalisée simultanément sur plusieurs caissons au moyen d'une même broche.

## Revendications

1. Caisson (1) récepteur d'un élément de fonction (2), en particulier d'un élément de traitement de fluide, tel que filtre, grille d'aération ou similaire, ledit caisson (1) récepteur étant constitué d'un cadre à face frontale (1A) ouverte pour permettre l'introduction à emboîtement de l'élément de fonction (2) jusqu'à une position d'appui à l'intérieur dudit cadre,
caractérisé en ce que, pour le maintien de l'élément de fonction (2) à l'intérieur du caisson (1), le caisson comporte des paliers (3) de support d'une broche (4) rotative, ladite broche (4) montée amovible à l'intérieur desdits paliers présentant un élément de serrage (5), tel qu'une came ou un plot, excentré agissant par poussée contre la surface frontale de l'élément de fonction (2) lors de l'entraînement en rotation de la broche (4) de manière à obtenir, par réaction sur les paliers (3) de support de broche, une immobilisation de l'élément de fonction (2) à l'intérieur dudit caisson (1).

2. Caisson (1) selon la revendication 1,
caractérisé en ce que l'élément de serrage (5) excentré est solidaire en rotation de la broche (4) rotative tournant sur elle-même autour de son axe longitudinal.

3. Caisson (1) selon l'une des revendications 1 et 2,
caractérisé en ce que les paliers (3) de support de broche du caisson (1) affectent la forme de crochets disposés sur les parties externes des faces latérales du cadre du caisson.

4. Caisson (1) selon l'une des revendications 1 à 3,
caractérisé en ce que la broche (4) est équipée d'une poignée (6) montée de préférence amovible sur ladite broche pour faciliter l'entraînement en rotation de la broche.

5. Batterie de caissons récepteurs du type formée d'une pluralité de caissons récepteurs, chaque caisson récepteur étant constitué d'un cadre à face frontale (1A) ouverte pour permettre l'introduction à emboîtement d'un élément de fonction (2), notamment d'un élément de traitement de fluide, jusqu'à une position d'appui à l'intérieur dudit cadre,
caractérisée en ce que chaque caisson récepteur de la batterie de caissons comporte au moins un palier (3) support d'une broche (4) rotative, ladite broche montée amovible à l'intérieur des paliers (3) de la batterie de caissons présentant des éléments de serrage, tels qu'une came ou un plot excentré, agissant par poussée contre la surface frontale de l'élément de traitement correspondant lors de la rotation de la broche (4) de manière à obtenir par réaction sur les paliers (3) de support de broche (4) une immobilisation simultanée de chaque élément de traitement à l'intérieur de chaque caisson.

6. Batterie de caissons selon la revendication 5,
caractérisée en ce que la broche (4) est sectionnée, les extrémités de chaque section de broche étant agencées pour pouvoir se raccorder aux extrémités d'une section de broche adjacente, la liaison entre sections de broche assurant, lors d'un entraînement en rotation d'une section de broche, l'entraînement simultané en rotation d'une section de broche (4) adjacente.
